# EUROPÄISCHE PATENTANMELDUNG

(11) **EP 1 154 604 A1**
(43) Veröffentlichungstag der Anmeldung: **14.11.2001**
(21) Anmeldenummer: 00109738.5
(22) Anmeldetag: 08.05.2000
(51) Int. Cl.: H04L 25/06

(54) **Einrichtung und Kompensationsverfahren für Gleichspannungsoffsets**

(71) Anmelder: Infineon Technologies AG, 81669 München (DE)
(72) Erfinder: Wagner, Elmar, Dipl.-Ing., 47269 Duisburg (DE)
(74) Vertreter: Fischer, Volker, Dipl.-Ing.

(57) **Zusammenfassung**

Zur Demodulation eines amplitudenmodulierten, offsetbehafteten Signals sind zwei Zeitkonstanten in einer Filtereinheit (FI) vorgesehen. Hierzu weist die Filtereinheit (FI) zwei analoge oder digitale Tief- oder Hochpaßfilter auf. Zwischen beiden Zeitkonstanten wird mit einem ersten Schalter (S1) umgeschaltet. Wenn in einem Einstellbetrieb mehrere Bits gleichen Zustands aufeinanderfolgen, wird mit dem ersten Schalter (S1) auf eine langsamere Zeitkonstante umgeschaltet, um die zu ermittelnde Schwellenspannung (U_{S}) nicht zu verfälschen. In einem Normalbetrieb wird anschließend die gespeicherte Schwellenspannung (U_{S}) zur Unterscheidung der in einem Eingangssignal codierten Zustände verwendet. Hierbei ist im Normalbetrieb die langsamere Zeitkonstante gültig.

## Beschreibung

Die Erfindung betrifft eine Kompensationsschaltung für ein offsetbehaftetes Eingangssignal sowie ein Verfahren zur Kompensation eines Offsets in einem Eingangssignal.

Bei digitalen Modulationsverfahren in der Nachrichtenübertragung wird die Amplitude, die Frequenz oder die Phase eines Signals, das eine Trägerfrequenz hat, entsprechend einer zu übermittelnden Datenfolge moduliert. Bei einer Frequenzmodulation oder Frequenzumtastung (FSK, Frequency Shift Keying) wird zwischen verschiedenen Frequenzen umgetastet. Im einfachsten Fall gibt es zwei binäre Zustände Null und Eins, entsprechend genügen zur Signalübertragung zwei Frequenzen, die symmetrisch um die Trägerfrequenz angeordnet sind.

Bei modernen Kommunikationsverfahren, wie beispielsweise bei GSM (Global System for Mobile Communication), wird ein sogenanntes GMSK-(Gaussian Minimum Shift Keying-)Verfahren eingesetzt, bei dem zur Codierung digitaler Informationen gaussförmige Impulse anstelle von Rechteckimpulsen verwendet werden. Das GMSK-Verfahren ist ein phasenkontinuierliches FSK-Verfahren. Auch das zur Kommunikation in Schnurlostelefonen eingesetzte DECT-(Digital Enhanced Cordless Telecommunication-)Verfahren ist, ebenso wie GSM, ein FSK-Verfahren.

Zur Demodulation eines frequenzmodulierten Signals in einem Demodulator wird der Trägerfrequenz im Empfänger eine Mittenspannung zugeordnet. Die Ausgangsspannung des Demodulators im Empfänger ist größer als die Mittenspannung, wenn eine logische Eins übertragen wird und kleiner als die Mittenspannung, wenn eine logische Null übertragen wird. Im frequenzmodulierten Signal wird die Trägerfrequenz um einen bestimmten Frequenzhub erhöht, um eine Eins zu übertragen, und um einen bestimmten Frequenzhub verringert, um eine Null zu übertragen.

Aufgrund von Toleranzen kann die Trägerfrequenz des frequenzmodulierten Signals variieren, beispielsweise aufgrund von Temperaturdrifts in einem Sender. Hierdurch kann auch die der Trägerfrequenz zugeordnete Mittenspannung am Ausgang des Demodulators derart variieren, daß ein Gleichspannungsoffset vorliegt. Aufgrund von Toleranzen im Empfänger beziehungsweise Demodulator selbst, beispielsweise fertigungs- oder temperaturabhängigen Toleranzen, ist die Mittenspannung zusätzlichen Schwankungen unterworfen. Zur Festlegung einer Entscheidungsschwelle, welche eine einer logischen Eins zugeordnete Spannung von einer einer logischen Null zugeordneten Spannung und somit die beiden Zustände unterscheidet, ist die Festlegung einer Schwellenspannung erforderlich, welche den Gleichspannungs-(DC-)Offset der Mittenspannung kompensiert.

Bei bekannten Kommunikationssystemen, beispielsweise beim DECT-Standard, wird diese Schwellenspannung dadurch festgelegt, daß jedem Nutzdatenblock eine Präambel mit einer Folge von 16 Bit vorangestellt ist, welche abwechselnd Einsen und Nullen aufweist und zur DC-Offsetkompensation herangezogen wird. Mit einem einfachen Tiefpaßfilter kann der SpannungsMittelwert dieser den ersten 16 Bit entsprechenden Signalfolge ermittelt und am Ende der 16 Bit-Präambel der so erhaltene Wert gespeichert werden, beispielsweise als Spannungswert an einem Kondensator. Die Steuerung dieser Mittelung beziehungsweise der Erzeugung einer Schwellenspannung erfolgt üblicherweise im digitalen Basisbandbaustein eines DECT-Empfängers.

Das sogenannte Bluetooth-System beschreibt eine drahtlose Schnittstelle zwischen einzelnen Komponenten von Informations- und Kommunikationssystemen zur Datenübertragung über kurze Distanzen. Beispielsweise können an einen tragbaren Computer Peripheriegeräte wie Drucker, Maus, Tastatur, Mobiltelefon, Modem et cetera kabellos angeschlossen werden. Das Bluetooth-System arbeitet im 2,4 Gigahertz-ISM- (Industrial Scientific and Medical-) Band. In den meisten Ländern der Erde, beispielsweise USA und Europa, umfaßt das ISM-Band den Frequenzbereich von 2.400 bis 2.483,5 Megahertz. Die Kanäle sind dabei mit der Formel f = 2.402 + n MHz festgelegt, wobei f die Trägerfrequenz des betreffenden Kanals ist und die Variable n ganzzahlige Werte von 0 bis 78 annehmen kann.

Problematisch beim Bluetooth-System, welches mit einem Zeitschlitzverfahren arbeitet, ist, daß die Präambel eines dem eigentlichen Nutzsignal (Payload) jeweils vorangestellten Access-Codes, welcher üblicherweise 72 Bit umfaßt, lediglich 4 Bit lang ist. Zudem kann diese 4 Bit lange Präambel bezüglich ihrer zeitlichen Position in einer Bit-Sequenz um bis zu 10 Bit variieren. Diese 4 Bit lange Präambel ist jedoch zu kurz zur Festlegung einer geeigneten Entscheidungsschwelle zur sicheren Unterscheidung der logischen Zustände.

Es ist bereits bekannt, zur Bestimmung der Schaltschwelle bei Bluetooth in einer digitalen Signalverarbeitung eine Entscheidungsschwelle des digitalisierten und demodulierten Datensignals zu bestimmen. Die hierfür erforderlichen Schaltungen sind aber sehr aufwendig und je nach Implementation der digitalen Signalverarbeitung unzuverlässig.

Aufgabe der vorliegenden Erfindung ist es, eine Schaltungsanordnung zur Kompensation für ein offsetbehaftetes Eingangs-signal sowie ein Verfahren zur Kompensation eines Offsets in einem Eingangssignal anzugeben, welche für Signale geeignet sind, bei denen die Präambel kurz ist.

Bezüglich der Anordnung wird die Aufgabe von einer Kompensationsschaltung für ein offsetbehaftetes Eingangssignal gelöst mit
- einer Filtereinheit, der ein Eingangssignal zuführbar ist, und die je einen Signalpfad mit einer ersten Zeitkonstante und einer zweiten Zeitkonstante aufweist,
- einem ersten Schalter, mit dem zwischen den Signalpfaden mit erster und zweiter Zeitkonstante umgeschaltet werden kann,
- einem ersten Komparator, der der Filtereinheit nachgeschaltet ist, und
- einem ersten Decoder, der an einen Ausgang des ersten Komparators angeschlossen ist, und durch den der erste Schalter steuerbar ist.

Bezüglich des Verfahrens wird die Aufgabe mit einem Verfahren zur Kompensation eines Offsets in einem Eingangssignal gelöst, mit folgenden Verfahrensschritten:
- Filtern eines Eingangssignals mittels einer ersten Zeitkonstante,
- Bilden eines Ausgangssignals mit diskreten Zuständen durch Vergleichen des gefilterten Ausgangssignals mit einer Schwellenspannung oder mit dem ungefilterten Eingangs-signal,
- Umschalten auf eine zweite Zeitkonstante, welche länger als die erste Zeitkonstante ist, in einem Einstellbetrieb, wenn und so lange das Ausgangssignal zumindest zwei gleiche, aufeinanderfolgende Zustände aufweist, und
- Einstellen der zweiten Zeitkonstante in einem auf den Einstellbetrieb folgenden Normalbetrieb.

Der Erfindung liegt das Prinzip zugrunde, daß zwischen einer ersten und einer zweiten Zeitkonstante umgeschaltet werden kann und somit der Offset eines Eingangssignals mit einem ersten Komparator und einem ersten Decoder kompensiert wird. Der erste Decoder kann dabei in Abhängigkeit der am Komparatorausgang anliegenden Bitfolge des Ausgangssignals auf den ersten Schalter S1 geeignet einwirken.

Das Eingangssignal kann ein sequentielles, bitweise codiertes Signal sein. Zur Bestimmung einer Entscheidungsschwelle wird in einem Einstellbetrieb der erste Schalter geschlossen, somit ist eine erste Zeitkonstante wirksam. Nachdem eine geeignete Entscheidungsschwelle eingestellt ist, kann während einer Nutzdatenübertragung der erste Schalter geöffnet werden und somit auf eine andere, zweite Zeitkonstante umgeschaltet werden. Diese kann größer sein als die erste Zeitkonstante. Der erste Schalter kann aber auch bereits während der Einstellung der Entscheidungsschwelle, die dem Nutzbetrieb vorausgeht, geöffnet werden. Dies kann beispielsweise dann sinnvoll sein, wenn das Eingangssignal eine Folge von mehreren, unmittelbar aufeinanderfolgenden gleichen Zuständen hat. Diese würden nämlich dazu führen, daß die Entscheidungsschwelle nicht zur Unterscheidung der Zustandspegel geeignet ist, da die Entscheidungsschwelle den Wert eines Zustands, Null oder Eins, annehmen würde. Hierdurch kann das beschriebene Prinzip auch bei solchen Signalen angewendet werden, bei denen die Präambel kurz ist.

Die erste und die zweite Zeitkonstante können mit jeweils einem Tiefpaß oder mit jeweils einem Hochpaß realisiert sein.

Werden Tiefpässe verwendet, so können diese entweder analog aus je einem Widerstand und einem Kondensator gebildet sein, oder digital implementiert sein.

Um eine schnellere oder genauere Offset-Kompensation zu erreichen, können weitere Zeitkonstanten, Komparatoren und Decoder vorgesehen sein.

Das gefilterte Eingangssignal, welches beispielsweise an einem Hochfrequenz-Empfänger ableitbar ist, ist dem ersten Komparator zuführbar.

Das beschriebene Prinzip ermöglicht eine einfache und zuverlässige Kompensation von Gleichspannungsoffsets an einem Empfängerausgang auch dann, wenn keine Entkopplung mit Serienkapazitäten möglich ist.

In einer vorteilhaften Ausführungsform der vorliegenden Erfindung weist die Filtereinheit eine dritte Zeitkonstante auf, wobei eine Umschaltung auf die dritte Zeitkonstante mit einem zweiten Schalter vorgesehen ist. Ein zweiter und ein dritter Komparator sind der Filtereinheit nachgeschaltet, und ein zweiter Decoder ist an je einem Ausgang des zweiten und des dritten Komparators angeschlossen, mit dem der zweite Schalter ansteuerbar ist. Der zweite und dritte Komparator bilden gemeinsam einen Fensterkomparator. Sobald der Spannungswert des Eingangssignals eine obere Grenze übersteigt oder eine untere Grenze unterschreitet, so kann, um einen vorliegenden sehr großen Gleichspannungs-Offset auszugleichen, ein zweiter Schalter auf eine dritte Zeitkonstante umschalten, welche vorzugsweise kleiner als die erste und zweite Zeitkonstante ist, und mittels derer die Offsetspannung schnell kompensiert werden kann.

Ein am Ausgang des zweiten und dritten Komparators angeschlossener zweiter Decoder erkennt ein Überschreiten einer oberen oder ein Unterschreiten einer unteren Grenze und schaltet ggf. mittels des zweiten Schalters die dritte Zeitkonstante zu.

Die Grenzwerte des Fensterkomparators können jeweils mittels Spannungsquellen eingestellt werden. Die obere Grenze sollte etwas oberhalb und die untere Grenze etwas unterhalb der bei geeigneter Wahl der Schwellenspannung auftretenden Eingangs-spannungswerte liegen.

In einer weiteren, vorteilhaften Ausführungsform der vorliegenden Erfindung ist die dritte Zeitkonstante kleiner als die erste Zeitkonstante, welche kleiner als die zweite Zeitkonstante ist.

In einer weiteren, vorteilhaften Ausführungsform der vorliegenden Erfindung sind zur Bildung der Zeitkonstanten Hochpaß-Filter vorgesehen.

In einer weiteren, vorteilhaften Ausführungsform der vorliegenden Erfindung sind zur Bildung der Zeitkonstanten Tiefpaß-Filter vorgesehen.

Ein analog aufgebautes Tiefpaß-Filter kann mit einem Serienwiderstand, dem eine Kapazität gegen Masse nachgeschaltet ist, realisiert sein. Mehrere RC-Glieder zur Bildung mehrerer Zeitkonstanten können eine gemeinsame Kapazität aufweisen.

Ein analog aufgebautes Hochpaß-Filter kann mit einem Serienkondensator, dem ein Widerstand gegen Masse nachgeschaltet ist, aufgebaut sein. Mehrere Hochpaß-Filter zur Bildung mehrerer Zeitkonstanten können eine gemeinsame Kapazität aufweisen.

In einer weiteren, vorteilhaften Ausführungsform der vorliegenden Erfindung können Hochpaß-Filter oder Tiefpaß-Filter als digitale Filter realisiert sein. Hierzu kann ein Verzögerungsglied vorgesehen sein. Der erste und zweite Decoder kann dabei einen Verstärkungsfaktor in einer Rückkopplungsschleife zur Beeinflussung der Zeitkonstante des digitalen Filters variieren.

In einer weiteren, vorteilhaften Ausführungsform der vorliegenden Erfindung kann zwischen der Spannung des Eingangs-signals und einer gesteuerten Spannungsquelle umgeschaltet werden. Dies kann beispielsweise dann sinnvoll sein, wenn während der Bestimmung eines Offset-Kompensationswerts mehrere gleiche, im Eingangssignal codierte binäre Zustände aufeinanderfolgen, so daß mit der eingestellten Zeitkonstante eine Verfälschung des Kompensationswerts erfolgen würde. Bei langen Sequenzen von gleichen, unmittelbar aufeinanderfolgenden Bits wird mehrmals zwischen Eingangsspannung und gesteuerter Spannung hin- und hergeschaltet.

Wenn das Eingangssignal als Differenzsignal vorliegt, so kann das Umschalten der Eingangsspannung dadurch realisiert sein, daß ein Umpolen der Differenzsignal-Leitungen vorgenommen wird. Auch hierdurch kann eine aufgrund einer langen Folge gleicher Zustände im Eingangssignal bedingte Verfälschung des Kompensationswerts vermieden werden. Der erste Decoder kann eine Folge unmittelbar aufeinanderfolgender, gleicher Zustände detektieren und eine entsprechende Umpolung vornehmen. Wenn beispielsweise zehn aufeinanderfolgende logische Einsen codiert sind, so kann das als Differenzsignal vorliegende Eingangssignal jeweils nach drei Bit umgepolt werden.

Weitere Einzelheiten der Erfindung sind in den Unteransprüchen angegeben.

Nachfolgend wird die Erfindung an zwei Ausführungsbeispielen anhand der Zeichnungen näher erläutert.

### Es zeigen:

- Figur 1: ein erstes Ausführungsbeispiel der Erfindung in einem Blockschaltbild,
- Figur 2: die Zusammensetzung des Access-Codes gemäß Bluetooth-Spezifikation,
- Figur 3: ein zweites Ausführungsbeispiel der vorliegenden Erfindung an einem Blockschaltbild,
- Figur 4: ein Ausführungsbeispiel der vorliegenden Erfindung mit analog arbeitenden Hochpaß-Filtern,
- Figur 5: ein Ausführungsbeispiel der vorliegenden Erfindung mit digital arbeitenden Tiefpaß-Filtern,
- Figur 6: ein Ausführungsbeispiel der vorliegenden Erfindung mit analog aufgebauten Tiefpaß-Filtern sowie einer Umschalteinrichtung für das Eingangssignal, und
- Figur 7: ein Ausführungsbeispiel der vorliegenden Erfindung mit analog aufgebauten Tiefpaß-Filtern für ein als Differenzsignal vorliegendes Eingangssignal.

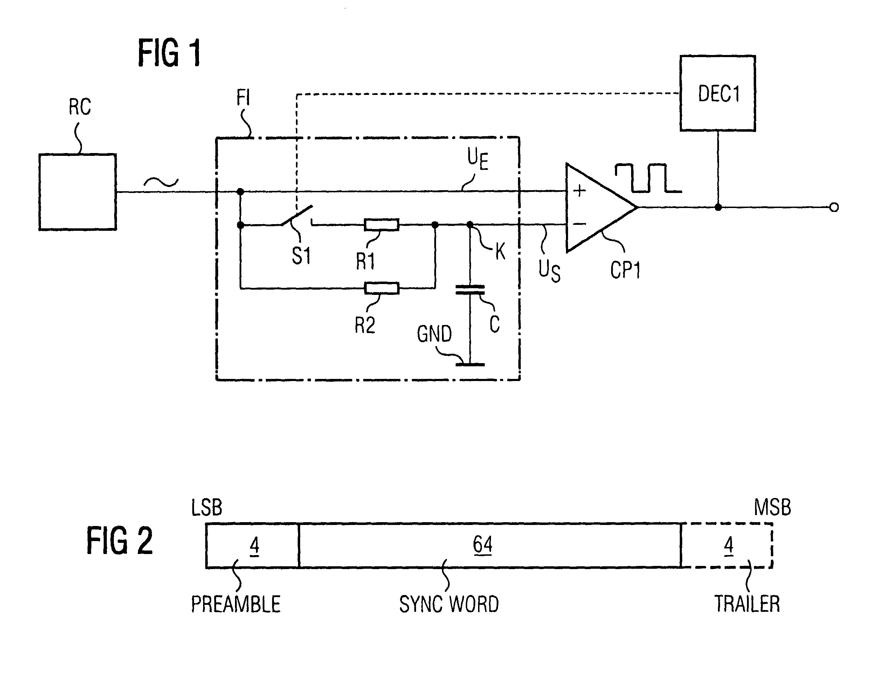

Figur 1 zeigt einen Empfänger RC, der mit einem ersten Eingang eines ersten Komparators CP1 verbunden ist, und an dem ein Signal mit einer Eingangsspannung U_{E} ableitbar ist. Dieses Eingangssignal ist weiterhin einem ersten Schalter S1 zuführbar, der in Serie zu einem ersten Widerstand R1 geschaltet ist. Parallel zu erstem Schalter S1 und erstem Widerstand R1 ist ein zweiter Widerstand R2 angeschlossen. An das jeweils freie Ende des ersten und zweiten Widerstands R1, R2, die in einem Knoten K miteinander verbunden sind, ist ein Kondensator C gegen Masse GND geschaltet. Am Kondensator C ist eine Schwellenspannung Uₛ abgreifbar, welche einem zweiten Eingang des ersten Komparators CP1 zuführbar ist. Am Ausgang des ersten Komparators CP1 ist ein erster Decoder DEC1 angeschlossen, welcher auf den ersten Schalter S1 einwirkt.

Der Empfänger RC ist ein Bluetooth-Empfänger, in dem ein frequenzmoduliertes Signal demoduliert wird. Einer Trägerfrequenz des frequenzmodulierten Signals wird dabei ausgangsseitig am Empfänger RC eine Mittenspannung zugeordnet. Diese Mittenspannung kann jedoch einen Gleichspannungs-Offset aufweisen, der durch die Trägerfrequenz-Toleranz von ± 75 kHz laut Bluetooth-Spezifikation bedingt sein kann. Zur Bestimmung einer geeigneten Schwellenspannung U_{S} muß daher über eine Vielzahl sequentieller Bits gemittelt werden. Hierzu wird in einem Einstellbetrieb über den Access Code, der gemäß Bluetooth-Spezifikation 68 oder 72 Bit lang ist, gemittelt. Dieser Spannungsmittelwert wird im Kondensator C gespeichert und steht dem Komparator CP1 als Schwellenspannung Uₛ zur Verfügung, so daß der Komparator CP1 durch Vergleichen der Spannung des Eingangssignals U_{E} mit der Schwellenspannung U_{S} die binär codierten Zustände detektieren kann. Der erste Widerstand R1 bildet zusammen mit Kondensator C eine erste Zeitkonstante, welche in einem Einstellbetrieb üblicherweise wirksam ist. Hierzu ist in einem Einstellbetrieb üblicherweise der Schalter S1 geschlossen. Nachdem der Kondensator C auf eine Mittenspannung aufgeladen ist, wird für einen dem Einstellbetrieb nachfolgenden Normalbetrieb, bei dem Nutzdaten übertragen werden, der Schalter S1 geöffnet, so daß eine zweite Zeitkonstante wirksam ist, welche durch den Widerstand R2 zusammen mit Kondensator C gebildet ist. Diese zweite Zeitkonstante ist groß gegenüber der ersten Zeitkonstante. Hierdurch wird die eingestellte Schwellenspannung Uₛ im Kondensator C praktisch während des vollständigen Nutzsignals in einem Zeitschlitz (Burst) praktisch nicht verändert. Wenn jedoch bereits im Einstellbetrieb, das heißt, während des Access Codes, mehrere, unmittelbar aufeinanderfolgende Bits den gleichen Zustand repräsentieren, wird bereits während des Einstellbetriebs der Schalters S1 so lange geöffnet, bis der nächste Zustandswechsel erfolgt. Hierfür ist der erste Decoder DEC1 vorgesehen. Die Funktionalität des Decoders DEC1 ist in einem Basisband-Baustein, des Bluetooth-Empfängers angeordnet, wobei der Basisband-Baustein nicht in den Figuren dargestellt ist. Würde man den ersten Schalter S1 bei einer Folge mehrerer Nullen oder Einsen, denen je ein Spannungswert des Eingangssignals zugeordnet ist, nicht öffnen, so würde der Spannungswert am Kondensator C nicht mehr die richtige Mittenspannung sein, sondern auf den einer logischen Null oder einer logischen Eins zugeordneten Spannungswert zulaufen.

Figur 2 zeigt den Aufbau des Access Codes gemäß Bluetooth-Spezifikation mit Präambel PREAMBLE, Synchronisationsdaten SYNC WORD und Anhang TRAILER, welcher nicht in jedem Fall übertragen wird. Die Präambel, deren erstes Bit das LSB (Least Significant Bit) ist, umfaßt 4 Bit, das Synchronisationswort umfaßt 64 Bit und der Anhang umfaßt 4 Bit, von denen das letzte das MSB (Most Significant Bit) ist. Es ist offensichtlich, daß die 4 Bit der Präambel nicht zur zuverlässigen Bestimmung einer richtigen Mittenspannung und damit eines geeigneten Schwellenwerts für die Auswertung der nachfolgenden Nutzdaten ausreichen. Vielmehr müssen zusätzlich die Bits des Synchronisationswortes des Access Codes hinzugezogen werden. Diese können jedoch bis zu 28 unmittelbar aufeinanderfolgende Bits ohne Zustandswechsel aufweisen. Deshalb ist die in Figur 1 gezeigte Umschaltung zwischen zwei Zeitkonstanten, geeignet, um trotzdem die richtige Schwellenspannung U_{S} zu ermitteln.

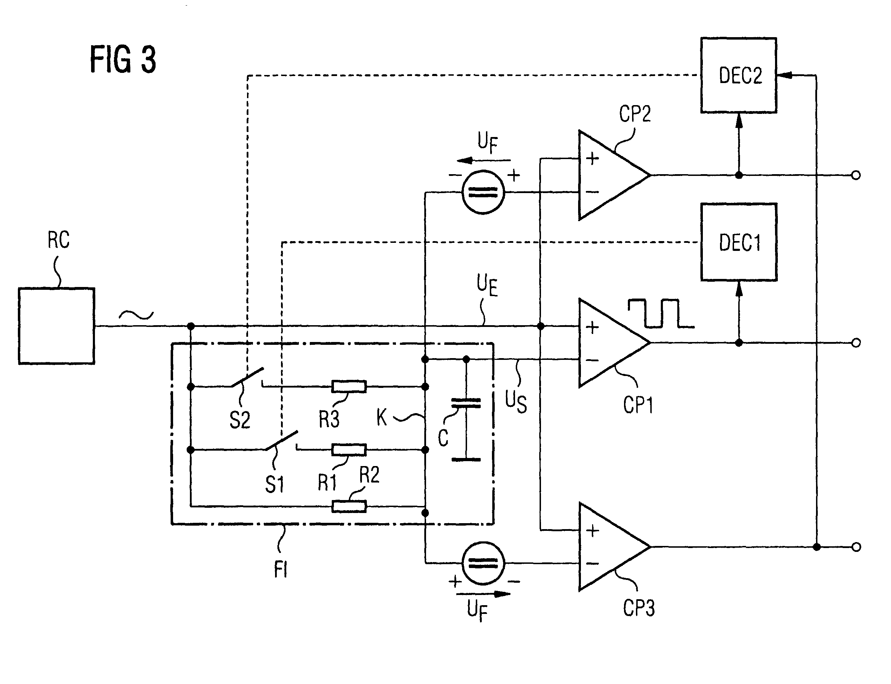

Figur 3 zeigt ein weiteres Ausführungsbeispiel, bei dem zum Ausführungsbeispiel gemäß Figur 1 zusätzlich ein Fensterkomparator sowie eine dritte Zeitkonstante zur schnellen Ausregelung großer Gleichspannungs-Offsets des Eingangssignals vorgesehen sind. Hierfür ist zwischen Empfänger RC und Knoten K ein zweiter Schalter S2 in Serie zu einem dritten Widerstand R3 geschaltet. Das Eingangssignal ist jeweils dem ersten Eingang des zweiten Komparators CP2 und des dritten Komparators CP3 zuführbar. Die zweiten Eingänge des zweiten Komparators CP2 und des dritten Komparators CP3 sind mit dem Knoten K über je eine Spannungsquelle verbunden. Über den Spannungsquellen fällt dabei jeweils eine Spannung U_{F} ab. Diese Spannung U_{F} soll so gewählt werden, daß in einem Normalbetrieb der Schaltung gemäß Figur 3, das heißt bei richtig eingestellter Schwellenspannung U_{S}, weder der Komparator CP2 noch der Komparator CP3 ansprechen. Wenn zu Beginn eines Einstellbetriebs ein hoher Gleichspannungs-Offset auftritt, welcher eine mit dem zweiten Komparator CP2 detektierbare obere Grenze überschreitet oder eine mit dem dritten Komparator CP3 einstellbare untere Grenze unterschreitet, so wird dies vom zweiten Decoder DEC2 detektiert, welcher auf einen zweiten Schalter S2 einwirkt, der eine dritte Zeitkonstante aktiviert, so daß der Kondensator C auf eine entsprechend angepaßte Schwellenspannung umgeladen wird. Die mit dem dritten Widerstand und dem Kondensator C gebildete dritte Zeitkonstante soll folglich eine kurze Zeitkonstante sein, welche kürzer als die erste Zeitkonstante ist, die wiederum kürzer als die zweite Zeitkonstante ist. Für die Widerstände gilt demnach die Beziehung R3 < R1 < R2. Um die Erfordernisse des Bluetooth-Systems zu erfüllen, sollte die dritte Zeitkonstante einem Äquivalent von zirka 2 Bit entsprechen, die erste Zeitkonstante einem Äquivalent von 15 Bit und die zweite Zeitkonstante einem Äquivalent von 400 Bit. Somit kann auch bei einer sehr kurzen Präambel eine zuverlässige Schwellenspannung eingestellt werden. Das Hinzufügen der dritten Zeitkonstanten ermöglicht ein schnelles Kompensieren großer DC-Offsets.

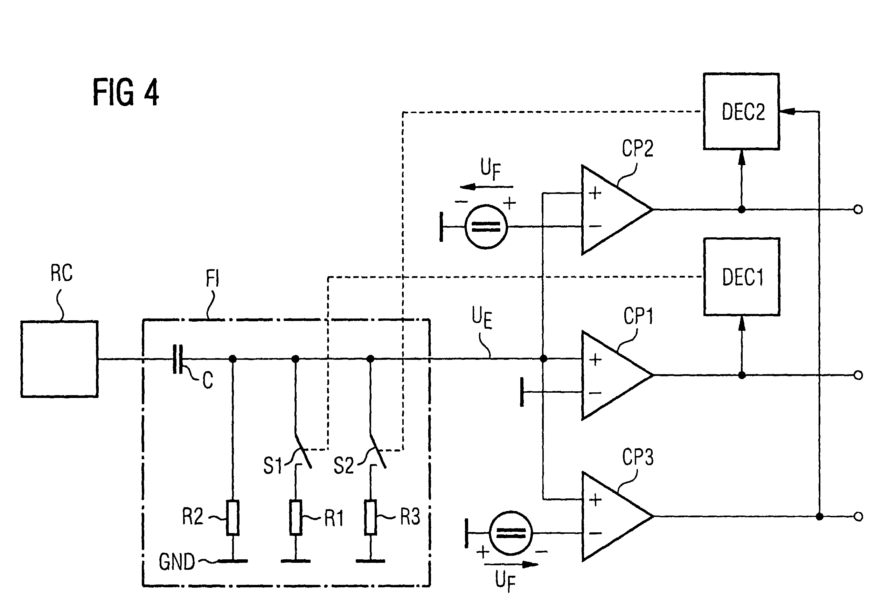

Figur 4 zeigt ein Ausführungsbeispiel der Erfindung mit analog aufgebauten Hochpaß-Filtern. Einer Kapazität C, welche an einem Empfänger RC angeschlossen ist, ist ein Eingangssignal zuführbar. Der Kapazität C sind mehrere Widerstände R2, R1, R3 jeweils gegen Masse GND nachgeschaltet. Weiterhin ist die Kapazität C an einen ersten Eingang eines ersten Komparators CP1 angeschlossen. Die Umschaltung zwischen den Zeitkonstanten erfolgt mit einem ersten Schalter S1 und einem zweiten Schalter S2. Ein erster Decoder DEC1 ist an den Ausgang des ersten Komparators CP1 angeschlossen und wirkt auf den ersten Schalter S1 ein. Mit dem zweiten Komparator CP2 und dem dritten Komparator CP3 ist ein Fensterkomparator realisiert. Hierzu sind die zweiten Eingänge des zweiten und dritten Komparators CP2, CP3 jeweils über eine Spannungsquelle U_{F} gegen Masse geschaltet. Der erste Eingang des zweiten und dritten Komparators CP2, CP3 ist jeweils mit dem ersten Eingang des ersten Komparators CP1 verbunden. Ein zweiter Decoder DEC2 ist jeweils an den Ausgang des zweiten und dritten Komparators CP2, CP3 angeschlossen und kann auf den zweiten Schalter S2 einwirken. Überschreitet die Spannung U_{E} des Eingangs-signals einen oberen Grenzwert oder unterschreitet sie einen unteren Grenzwert, so schließt der Decoder DEC2 den zweiten Schalter S2 derart, daß ein vorliegender Gleichspannungs-offset schnell ausgeregelt werden kann. Hierzu weist das mit drittem Widerstand R3 und Kondensator C gebildete Hochpaß-Filter eine kleine Zeitkonstante auf.

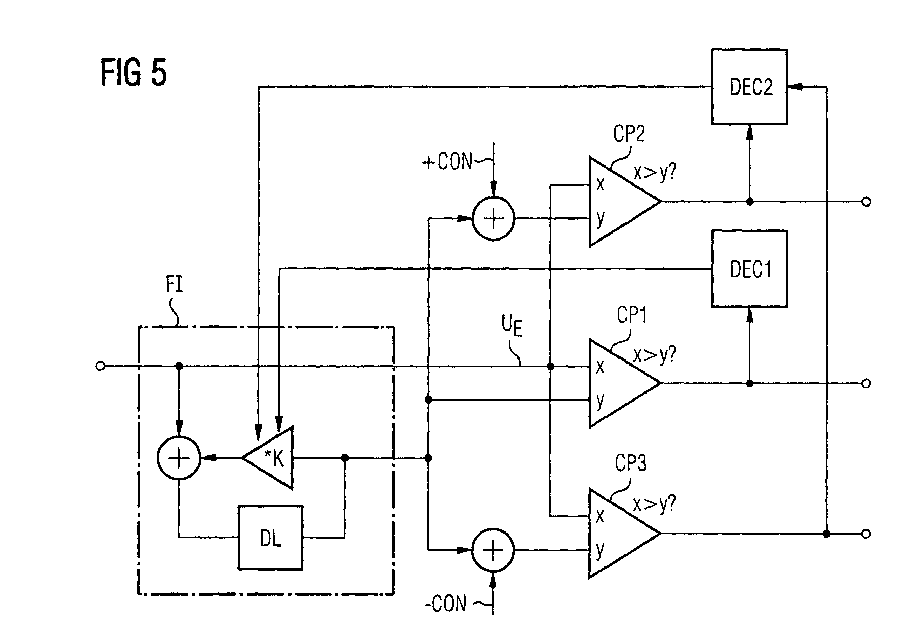

Figur 5 zeigt ein Ausführungsbeispiel mit digitalen Tiefpaß-Filtern in der Filtereinheit FI. Abgesehen von der digitalen Implementation der Tiefpaß-Filter entspricht das Ausführungsbeispiel gemäß Figur 5 dem analog aufgebauten Ausführungsbeispiel gemäß Figur 3. Ein digitales Tiefpaß-Filter, welches umschaltbare Zeitkonstanten aufweist, ist beispielhaft dadurch realisiert, daß das digital codierte Eingangssignal einem Summierknoten zugeführt wird, in dem es zu dem verzögerten und um einen Faktor K verstärkten Eingangssignal addiert wird. Hierzu ist ein Verzögerungsglied DL sowie ein digitaler Verstärker mit einstellbarem Multiplikator K angegeben. Diese Anordnung ist gemäß der Darstellung in Figur 5 an einen zweiten Eingang des ersten Vergleichers CP1 angeschlossen. Die Schwellwerte des Fensterkomparators CP2, CP3 sind jeweils mit digital codierten Konstanten +CON und -CON angegeben.

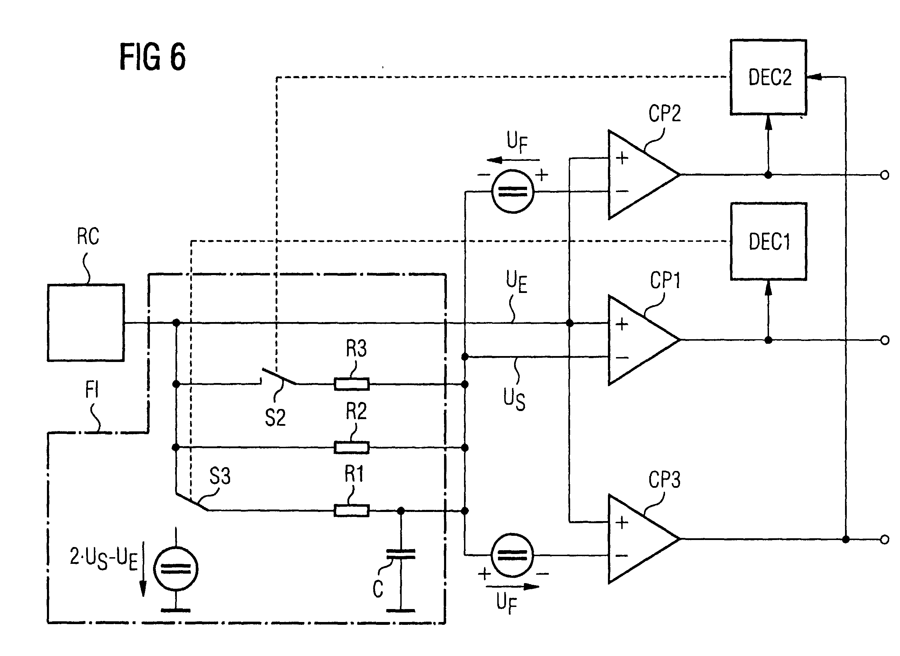

Figur 6 zeigt ein Ausführungsbeispiel der vorliegenden Erfindung, bei dem der erste Schalter, welcher als Umschalter S3 realisiert ist, die über dem ersten Widerstand R1 abfallende Spannung hierdurch umschalten kann, daß der Umschalter S3 von der Spannung des Eingangssignals U_{E} auf eine gesteuerte Spannungsquelle umschalten kann, über der die Spannung 2U_{S}-U_{E} abfällt. Hierdurch wird die über erstem Widerstand R1 abfallende Spannung von U_{E}-U_{S} auf U_{S}-U_{E} umgeschaltet. Die gesteuerte Spannungsquelle weist den Wert 2U_{S}-U_{E} auf, da der Kondensator C bereits auf die Spannung U_{S} aufgeladen ist. Abgesehen von dieser zusätzlichen Spannungsquelle 2U_{S}-U_{E} entspricht das Ausführungsbeispiel gemäß Figur 6 dem in Figur 3 dargestellten Ausführungsbeispiel.

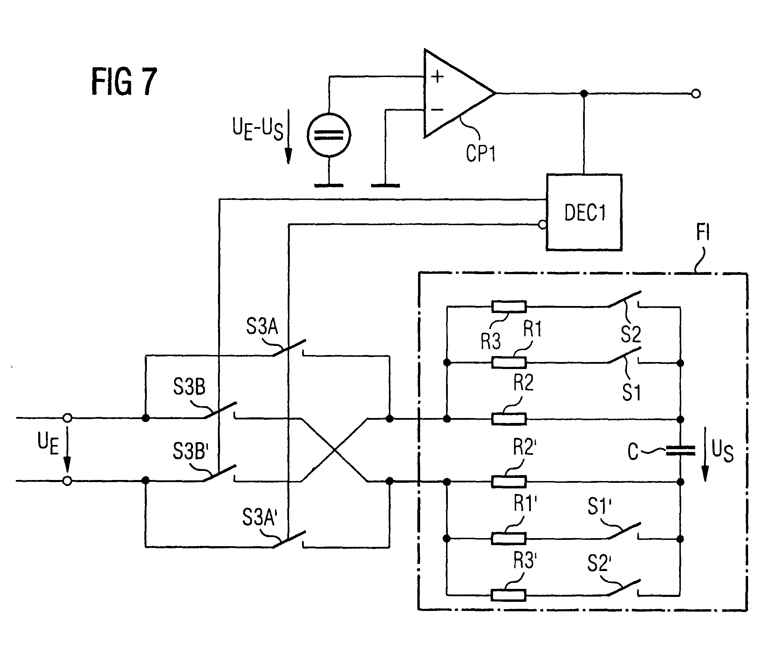

Figur 7 zeigt ein Ausführungsbeispiel mit einem als Differenzsignal vorliegenden Eingangssignal, sowie mit einer mit analogen RC-Gliedern realisierten Filtereinheit FI. Der zweite Decoder DEC2 sowie die Ansteuerung der ersten Schalter S1, S1' und der zweiten Schalter S2, S2' ist in Figur 7 der Übersichtlichkeit wegen nicht eingezeichnet. Mit den Schaltern S3A, S3A', S3B, S3B` kann das der Filtereinheit zuzuführende Eingangssignal umgepolt werden. Dies dient zur Vermeidung fehlerhafter Kompensation, die aufgrund von zahlreichen unmittelbar aufeinanderfolgenden Bits gleichen Zustands auftreten können. Wenn der erste Decoder DEC1 beispielsweise drei unmittelbar aufeinanderfolgende Bits gleichen Zustands detektiert, so wird die Eingangsspannung U_{E} dadurch umgepolt, daß die in einem Normalzustand geschlossenen Schalter S3A, S3A' geöffnet und die Schalter S3B, S3B' geschlossen werden. Hierzu weist der erste Decoder DEC1 zwei komplementäre Ausgänge auf. Dem ersten Komparator CP1, an dessen Ausgang der erste Decoder angeschlossen ist, wird die Differenzspannung U_{E}-U_{S} von Eingangsspannung U_{E} und Schwellenspannung U_{S}, welche über Kondensator C abfällt, zugeführt.

## Patentansprüche

1. Kompensationsschaltung für ein offsetbehaftetes Eingangs-signal mit
- einer Filtereinheit (FI), der ein Eingangssignal zuführbar ist, und die je einen Signalpfad mit einer ersten Zeitkonstante und einer zweiten Zeitkonstante aufweist,
- einem ersten Schalter (S1), mit dem zwischen den Signalpfaden mit erster und zweiter Zeitkonstante umgeschaltet werden kann,
- einem ersten Komparator (CP1), der der Filtereinheit (FI) nachgeschaltet ist, und
- einem ersten Decoder (DEC1), der an einen Ausgang des ersten Komparators (CP1) angeschlossen ist, und durch den der erste Schalter (S1) steuerbar ist.

2. Kompensationsschaltung nach Anspruch 1,
**dadurch gekennzeichnet, daß**
die Filtereinheit (FI) einen Signalpfad mit einer dritten Zeitkonstante aufweist, daß ein zweiter Schalter (S2) zum Umschalten auf den Signalpfad mit der dritten Zeitkonstante vorgesehen ist, daß ein zweiter und ein dritter Komparator (CP2, CP3) der Filtereinheit (FI) nachgeschaltet sind, und daß ein zweiter Decoder (DEC2) vorgesehen ist, der an je einem Ausgang des zweiten und dritten Komparators (CP2, CP3) angeschlossen ist, mit dem der zweite Schalter (S2) ansteuerbar ist.

3. Kompensationsschaltung nach Anspruch 2,
**dadurch gekennzeichnet, daß**
die dritte Zeitkonstante kleiner als die erste Zeitkonstante ist, welche kleiner als die zweite Zeitkonstante ist.

4. Kompensationsschaltung nach einem der Ansprüche 1 bis 3,
**dadurch gekennzeichnet, daß**
zur Bildung der Zeitkonstanten Hochpaß-Filter vorgesehen sind.

5. Kompensationsschaltung nach einem der Ansprüche 1 bis 3,
**dadurch gekennzeichnet, daß**
zur Bildung der Zeitkonstanten Tiefpaß-Filter vorgesehen sind.

6. Kompensationsschaltung nach Anspruch 4 oder 5,
**dadurch gekennzeichnet, daß**
Hochpaß-Filter oder Tiefpaß-Filter mit analog aufgebauten RC-Gliedern realisiert sind.

7. Kompensationsschaltung nach Anspruch 4 oder 5,
**dadurch gekennzeichnet, daß**
Hochpaß-Filter oder Tiefpaß-Filter als digitale Filter realisiert sind.

8. Kompensationsschaltung nach einem der Ansprüche 1 bis 7,
**dadurch gekennzeichnet, daß**
ein Umschalter (S3) vorgesehen ist zur Umschaltung zwischen Eingangsspannung (U_{E}) und einer gesteuerten Spannungsquelle.

9. Kompensationsschaltung nach Anspruch 6 und 8,
**dadurch gekennzeichnet, daß**
die an erstem Widerstand (R1) des ersten Tiefpaß-Filters anliegende Spannung zwischen der Spannung des Eingangssignals (U_{E}) und einer gesteuerten Spannungsquelle, welche die Spannung zwei mal Schwellenspannung (U_{S}) minus Eingangsspannung (U_{E}) aufweist, umschaltbar ist.

10. Kompensationsschaltung nach einem der Ansprüche 1 bis 9,
**dadurch gekennzeichnet, daß**
das Eingangssignal ein Differenzsignal ist.

11. Kompensationsschaltung nach Anspruch 10,
**dadurch gekennzeichnet, daß**
dritte Schalter (S3A, S3A', S3B, S3B') der Filtereinheit (FI) vorgeschaltet sind, mit denen das Eingangssignal umgepolt werden kann.

12. Kompensationsschaltung nach einem der Ansprüche 1 bis 11,
**dadurch gekennzeichnet, daß**
das Eingangssignal an einem Hochfrequenz-Empfänger (RC) ableitbar ist.

13. Verfahren zur Kompensation eines Offsets in einem Eingangssignal mit folgenden Verfahrensschritten:
- Filtern eines Eingangssignals mittels einer ersten Zeitkonstante,
- Bilden eines Ausgangssignals mit diskreten Zuständen durch Vergleichen des gefilterten Ausgangssignals mit einer Schwellenspannung oder mit dem ungefilterten Eingangssignal,
- Umschalten auf eine zweite Zeitkonstante, welche länger als die erste Zeitkonstante ist, in einem Einstellbetrieb, wenn und so lange das Ausgangssignal zumindest zwei gleiche, aufeinanderfolgende Zustände aufweist, und
- Einstellen der zweiten Zeitkonstante in einem auf den Einstellbetrieb folgenden Normalbetrieb.

14. Verfahren nach Anspruch 13,
**dadurch gekennzeichnet, daß**
das Eingangssignal einem Fensterkomparator, welcher einen zweiten Komparator (CP2) und einen dritten Komparator (CP3) aufweist, zugeführt wird, daß die Spannung (U_{E}) des Eingangs-signals mit einen oberen und einen unteren Spannungsgrenzwert verglichen wird und daß bei Überschreiten des oberen oder Unterschreiten des unteren Spannungsgrenzwertes auf eine dritte Zeitkonstante umgeschaltet wird.
